(19) Europäisches Patentamt
European Patent Office
Office européen des brevets

(11) Publication number: **0 257 228 A1**

# (12) EUROPEAN PATENT APPLICATION

(21) Application number: **87108916.5**

(51) Int. Cl.[4]: **C08L 81/02**, C08G 75/02

(22) Date of filing: **22.06.87**

(30) Priority: **25.07.86 JP 173891/86**
**25.07.86 JP 173892/86**
**25.07.86 JP 173893/86**

(43) Date of publication of application:
**02.03.88 Bulletin 88/09**

(84) Designated Contracting States:
**BE DE GB NL**

(71) Applicant: **Tohpren Co., Ltd.**
**11-5, Kitasode Sodegauramachi**
**Kimitsu-gun Chiba(JP)**

(72) Inventor: **Nakamura, Yoshiaki**
**4-10-8-101, Takahama**
**Chiba-shi Chiba(JP)**
Inventor: **Shinohara, Shuya**
**3-17-14, Higashikasai Edogawa-ku**
**Tokyo(JP)**
Inventor: **Hiraga,Mieko**
**4-16-6, Nakakokubu**
**Ichikawa-shi Chiba(JP)**

(74) Representative: **Vossius & Partner**
**Siebertstrasse 4 P.O. Box 86 07 67**
**D-8000 München 86(DE)**

## (54) Polyphenylene sulfide resin composition.

(57) Disclosed is a polyphenylene sulfide composition comprising a poly-p-phenylene sulfide homopolymer and at least one polyphenylene sulfide selected from a poly-p-phenylene sulfide/m-phenylene sulfide random copolymer, a poly-p-phenylene sulfide/m-phenylene sulfide block copolymer and a poly-m-phenylene sulfide homopolymer, wherein the amount of m-phenylene sulfide units is 3 to 30% by mole based on the sum of p-phenylene sulfide units and m-phenylene sulfide units in the composition. This composition has a low crystallization temperature while retaining a high melting point and is useful for film, fiber and other extrusion-shaped articles.

EP 0 257 228 A1

Xerox Copy Centre

## POLYPHENYLENE SULFIDE RESIN COMPSITION

The present invention relates to a polyphenylene sulfide (hereinafter referred to as "PPS") resin composition. More particularly, it relates to a composition comprising a blend of PPS resins, which is valuable as a material for films, fibers, composite materials, and extrusion-shaped articles having an excellent heat resistance.

Poly-p-phenylene sulfide is characterized by an excellent heat resistance, mechanical strength, chemical resistance, dimensional stability, and flame retardancy. Accordingly, poly-p-phenylene sulfide is injection molded and used for automobile parts, electric or electronic parts, and machine parts. However, poly-p-phenylene sulfide has problems in that the rate of crystallization is too high and coarse spherulites are quickly formed, and it is difficult to form fibers, films or other extrusion-shaped articles by the melt extrusion method.

Various processes for eliminating these problems have been proposed. For example, there can be mentioned a process in which the crystallization peak temperature is reduced below 200°C by reducing the chlorine content in the polymer to less than 0.3% by weight (JP-A-59-45323); a process in which a p-phenylene sulfide block copolymer is formed (JP-A-61-14228); and a process in which a p-phenylene sulfide/m-phenylene sulfide random copolymer is formed (US-A-3,869,434). However, these processes have a problem in that the reaction must be conducted in two stages for the synthesis of the polymer, or a long time is required for completion of the synthesis reaction. Moreover, a p-phenylene sulfide/m-phenylene sulfide block copolymer is a crystalline polymer and has a relatively high melting point, but as the content of m-phenylene sulfide units is increased, the melting point is considerably lowered and the copolymer does not have a satisfactory heat resistance. Furthermore, a p-phenylene sulfide/m-phenylene sulfide random copolymer is substantially amorphous and the melting point is extremely low, and therefore, the heat resistance thereof also is not satisfactory.

Therefore, a primary object of the present invention is to provide a PPS resin composition having a low crystallization temperature (Tc) while retaining a high melting point (Tm) (that is, a high heat resistance), which is valuable as a material for a film, a fiber or other extrusion-shaped articles by the melt extrusion method, without adopting the complicated means described above.

More specifically, in accordance with the present invention, there is provided a polyphenylene sulfide composition comprising a poly-p-phenylene sulfide homopolymer (hereinafter referred to as "p-PPS homopolymer") and at least one polyphenylene sulfide selected from the group consisting of a poly-p-phenylene sulfide/m-phenylene sulfide random copolymer (hereinafter referred to as "random PPS copolymer), a poly-p-phenylene sulfide/m-phenylene sulfide block copolymer (hereinafter referred to as "block PPS copolymer"), and a poly-m-phenylene sulfide homopolymer (hereinafter referred to as "m-PPS homopolymer"), wherein the amount of m-phenylene sulfide units is 3 to 30% by mole based on the sum of p-phenylene sulfide units and m-phenylene sulfide units in the composition.

The PPS resin composition of the present invention is roughly divided into three types. The first type is a composition comprising a p-PPS homopolymer and a random PPS copolymer, and this composition preferably comprises 5 to 95% by mole of a random PPS copolymer comprising 2 to 98% by mole of p-phenylene sulfide units and 98 to 2% by mole of m-phenylene sulfide units, and 95 to 5% by mole of a p-PPS homopolymer.

The second type is a composition comprising a p-PPS homopolymer and a block PPS copolymer, and this composition preferably comprises 5 to 95% by mole of a block copolymer comprising 2 to 98% by mole of p-phenylene sulfide units and 98 to 2% by mole of m-phenylene sulfide units and 95 to 5% by mole of a p-PPS homopolymer.

The third type is a composition comprising 70 to 97% by mole of a p-PPS homopolymer and 30 to 3% by mole of an m-PPS homopolymer, and this composition preferably comprises 90 to 97% by mole of a p-PPS homopolymer and 10 to 3% by mole of an m-PPS homopolymer.

Surprisingly, the PPS resin composition of the present invention has a low crystallization temperature (Tc) while retaining a high heat resistance.

The block PPS copolymer and random PPS copolymer as constituents of the PPS resin composition of the present invention can be obtained by reacting an aromatic p-dihalogen compound and an aromatic m-dihalogen compound with an alkali metal sulfide, or hydrogen sulfide and an alkali metal salt, or an alkali metal hydrosulfide and an alkali metal base in an amide type polar solvent. A typical reaction formula is as follows;

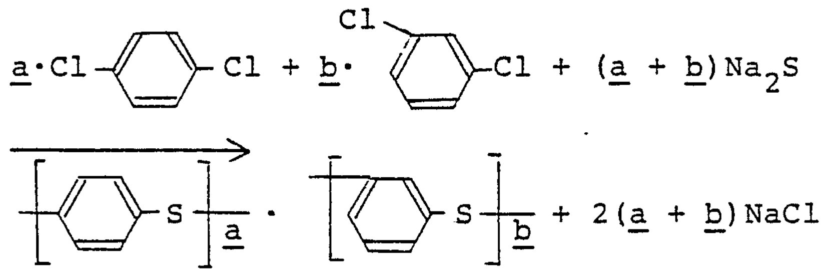

B-PPS
or
R-PPS

The molar ratio between p-phenylene sulfide units and m-phenylene sulfide units in the block PPS copolymer or random R-PPS copolymer (the ratio between a and b in the formula of the block PPS copolymer or random PPS copolymer) can be freely changed in the range of from 92/2 to 2/98. However, if the a/b molar ratio is low, the melting point is lowered, and at the step of mixing the polymers, the difference of the melting point becomes too large and the operation adaptability is reduced. Therefore, preferably the a/b molar ratio is from 30/70 to 95/5 for R-PPS, or from 97/3 to 50/50 for the block PPS copolymer.

Furthermore, the p-PPS homopolymer and m-PPS homopolymer can be prepared by using an aromatic p-dihalogen compound or aromatic m-dihalogen compound by the means described above according to the following reaction:

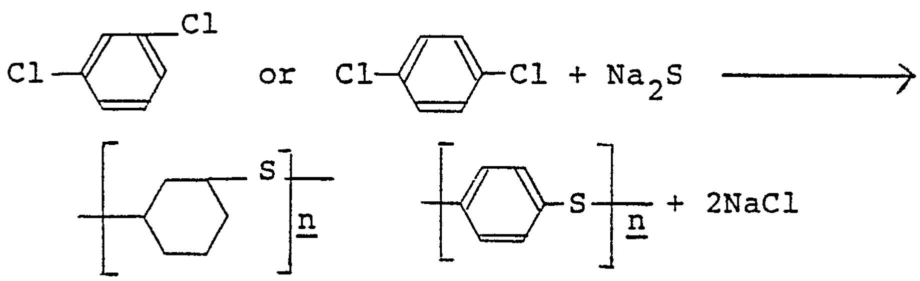

m-PPS p-PPS

Each of the random PPS copolymer, block PPS copolymer, p-PPS homopolymer, and m-PPS homopolymer used in the present invention may further contain copolycondensation units such as units of

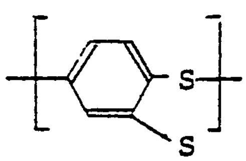 and 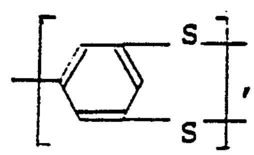,

or may contain up to 10% by mole of ether units such as units of

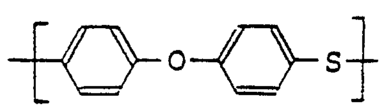,

sulfone units such as units of

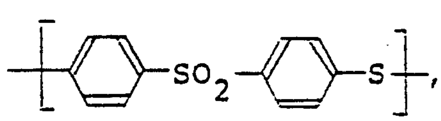,

and ketone units such as units of

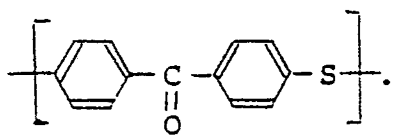

Furthermore, the random PPS copolymer, block PPS copolymer, p-PPS homopolymer and m-PPS homopolymer may be partially crosslinked by a heat treatment in air or a treatment with a chemical.

As the aromatic p-dihalogen compound and aromatic m-dihalogen compound used for the synthesis of the random PPS copolymer, block PPS copolymer, p-PPS homopolymer and m-PPS homopolymer, preferably p-dichlorobenzene and m-dichlorobenzene are used. As the sulfur source used for sulfidization, preferably a combination of sodium hydrosulfide and sodium hydroxide, sodium sulfide, and a combination of hydrogen sulfide and sodium hydroxide are used. The alkali metal sulfide or alkali metal hydrosulfide may be used in the form of a hydrate.

As the amide type polar solvent used for the synthesis of the random PPS copolymer, block PPS copolymer, p-PPS homopolymer, and m-PPS homopolymer there can be mentioned organic solvents containing an amide linkage in the molecule, such as hexamethylphosphoramide, dimethylsulfoxide, dimethylacetamide, N-alkyl-lactams and N,N-dialkylimidazolidinones. Amount these, N-alkyl-lactams are preferred and N-methylpyrrolidone is especially preferred.

The synthesis of the random PPS copolymer, p-PPS homopolymer and m-PPS homopolymer can be performed according to known processes, for example the process disclosed in US-A-3,354,129. More specifically, a sulfur source as mentioned above is mixed with a reaction medium in advance, Note, the mixture must be dehydrated to contol the water content below a predetermined level. As the dehydration means, a method is ordinarily adopted in which the mixture is heated at a temperature close to the boiling point of the solvent to effect distillation. Dehydration is advanced until the water content in the reaction mixture is less than about 3% by weight. The dehydrated mixture is once cooled below 170°C, and then a solution of the aromatic dihalogen compound in an amide type polar solvent, preferably a solution of p-dichlorobenzene and/or m-dichlorobenzene in N-methylpyrrolidone, is added to the dehydrated mixture. A condensation reaction is then carried out under compression. The condensation reaction is conducted at a reaction system temperature of 210 to 270°C for 0.5 to 10 hours under a reaction system pressure of about 6 to 15 bar. The condensation reaction may be carried out in the absence of a catalyst, but to obtain a polymer having a high molecular weight, preferably an alkali metal salt of an organic acid such as lithium acetate or sodium acetate, disclosed in JP-B-52-12240, of an aromatic sulfonic acid salt disclosed in JP - A - 55-43139 is used as the catalyst. A process also can be adopted in which an inorganic salt such as lithium carbonate or calcium hydroxide is used in combination with the catalyst. If necessary, the polymer can be subjected to neutralization, filtration, washing, and drying, whereby the polymer is recovered in the form of a greyish white powder or granule.

The synthesis of the block PPS copolymer can be performed according to the process disclosed in JP-A-61-14228, but other process may be adopted for the synthesis. For example, there can be mentioned a process in which one block is first formed and the formation of the other block and the connection of both blocks are simultaneously realized, and a process in which both blocks are separately formed and are connected to each other. Preferably, the polymerization degree of each of blocks constituting the block PPS copolymer used in the present invention is about 50 to about 1,000, especially about 100 to about 500. The molar ratio of the m-phenylene sulfide block component in the block polymer can be determined by the infrared absorption spectrum method, and the polymerization degree can be determined according to the terminal group determination method for analyzing the halogen and the intrinsic viscosity measurement method.

The polymerization degree of the random PPS copolymer, p-PPS homopolymer and m-PPS homopolymer are not particularly critical, but are generally in the range of from 100 to 3,000.

In the composition of the present invention, the mixing ratio between a p-PPS homopolymer and at least one member selected from the group consisting of a random PPS copolymer, a block PPS copolymer and an m-PPS homopolymer is such that the amount of m-phenylene sulfide units is 3 to 30% by mole based on the sum of the p-phenylene sulfide units and m-phenylene sulfide units in the composition. If the amount of m-phenylene sulfide units is smaller than 3% by mole, the crystallization temperature (Tc) of the PPS resin composition is high and the melt extrusion moldability is poor. If the amount of m-phenylene sulfide units is larger than 30% by mole, the melting point (Tm) is considerably low and the molded article has a poor heat resistance.

When a p-PPS homopolymer is mixed with a random R-PPS copolymer or a block PPS copolymer, 5 to 95% by mole of a p-PPS homopolymer can be mixed with 95 to 5% by mole of a random PPS copolymer or a block PPS copolymer. The ratio between the p-phenylene sulfide units and the m-phenylene sulfide units in the random PPS copolymer and block PPS copolymer can be freely changed in the range of from 98/2 to 2/98 (molar ratio).

When a p-PPS homopolymer is mixed with an m-PPS homopolymer, the mixing ratio betwen both components is in the range of from 70/30 to 97/3 (molar ratio), as pointed out hereinbefore. However, in view of the strength of a film or other shaped article prepared from the composition, preferably the mixing ratio is from 90/10 to 97/3 (molar ratio).

The PPS resin composition of the present invention can be easily obtained by preliminarily mixing PPS's by a powder mixer such as a Henschel mixer or a Nauter mixer and melt-blending the mixture by an extruder or the like maintained at a predetermined temperature. The temperature used for blending in the extruder or the like is preferably in the range of from the melting point (Tm) of the m-PPS homopolymer to 400°C. If the temperature is higher than 400°C, decomposition of the polymer is caused and good results can not be obtained. A temperature of 290 to 350°C is especially preferred for blending. The blending time is relatively short. For example, a blending time of 3 to 5 minutes is sufficient at a blending temperature of 300°C.

An inorganic filler such as talc, silica or calcium carbonate, a pigment such as titanium oxide or a reinforcer such as a glass fiber, a carbon fiber or an aramide fiber may be incorporated into the PPS resin composition of the present invention according to the intended use. Moreover, at least one synthetic resin selected from the group consisting of polycarbonates, polyphenylene oxides, polysulfones, polyacrylates, polyacetals, polyimides, polyamides, polyesters, polystyrene, and ABS can be incorporated into the PPS resin composition of the present invention. Further, necessary, an additive such as an antioxidant, a thermal stabilizer, a lubricant or an ultraviolet absorbent may be incorporated into the PPS resin composition of the present invention.

The crystallization temperature (Tc) and melting point (Tm) of the PPS resin composition of the present invention is intermediate between the Tc and Tm of the p-PPS homopolymer and the Tc and Tm of the random PPS copolymer, block PPS copolymer or m-PPS homopolymer. In general, however, the Tc of the PPS resin composition deviates greatly from that of the p-PPS homopolymer, and the Tm of the PPS resin composition is close to that of the p-PPS homopolymer. Namely, the PPS resin composition retains a heat resistance close to that of the p-PPS homopolymer and has a low crystallization temperature. Accordingly, the PPS resin composition is shapable by melt extrusion, in contrast to the p-PPS homopolymer resin, and the PPS resin composition can be formed into a fiber, a film or other extrusion-shaped article.

Synthesis examples of polymers used for the preparation of the PPS resin composition, examples of the PPS resin composition of the present invention, and comparative examples will now be described.

Synthesis Example 1

(synthesis of a random PPS copolymer containing 25% by mole of m-phenylene sulfide units)

A stainless steel autoclave having a capacity of 1 liter was charged with 91.0 g of 60% sodium sulfide, 280 g of N-methylpyrrolidone (NMP),, 2.03 g of 48% aqueous sodium hydroxide, and 68.0 g of anhydrous sodium p-toluene-sulfonate, and the mixture was heated at 204°C under nitrogen purging to distill 36.7 g of NMP containing 17.6 g of water. The mixture was then cooled to 150°C, and a solution of 25.73 g (0.175 mole) of m-dichlorobenzene and 77.18 g (0.525 mole) of p-dichlorobenzene in 100 g of NMP was added. The reaction system was closed and the pressure elevated to about 3.0 bar. The temperature was elevated with stirring, and reaction was carried out at 230°C for 2 hours and at 260°C for 3 hours. The reaction mixture was cooled to 100°C and solid-liquid separation was carried out by a Nutsche filter. The cake was washed four times with 300 g of warm water at 50°C and two times with the same amount of methanol, and was dried to obtain 69.6 g of a white granular polymer (hereinafter referred to as "R-PPS-1").

Synthesis Example 2

(synthesis of a random PPS copolymer containing 12% by mole of m-phenylene sulfide units)

The synthesis of the random PPS copolymer was carried out under the same conditions as described in Synthesis Example 1 except that the amounts charged of m-dichlorobenzene and p-dichlorobenzene were changed to 12.35 g and 90.55 g, respectively, to obtain 69.7 g of a white granular polymer (hereinafter referred to as "R-PPS-2").

Synthesis Example 3

(synthesis of a ranodm PPS copolymer containing 5% by mole of m-phenylene sulfide units)

The synthesis of the random PPS copolymer was carried out in the same manner as described in Synthesis Example 1 except that the amounts charged of m-dichlorobenzene and p-dichlorobenzene were changed to 5.15 g and 97.75 g, respectively, to obtain 69.3 g of a white granular polymer (hereinafter referred to as "R-PPS-3").

Synthesis Example 4

(synthesis of a block PPS copolymer containing 25% by mole of m-phenylene sulfide units)

A stainless steel autoclave having a capacity of 1 liter was charged with 91.0 g of 60% sodium sulfide, 280 g of N-methylpyrrolidone (NMP), 2.03 g of 48% aqueous sodium hydroxide, and 27.3 g of sodium p-toluene-sulfonate, and the mixture was dehydrated under nitrogen purging to distill 33.5 g of NMP containing 16.1 g of water. The mixture was then cooled to 150°C and 102.9 g of p-dichlorobenzene was added, and the pressure was elevated to about 3.0 bar by nitrogen. The temperature was elevated with stirring, and reaction was carried out at 230°C for 2 hours and at 260°C for 3 hours. The reaction mixture was cooled to 100°C and solid-liquid separation was carried out by using a filter. The cake was washed for times with 300 g of warm water at 50°C and two times with the same amount of methanol, and was dried to obtain a white powdery polymer. When the polymer was analyzed, it was found that the intrinsic viscosity was 0.25 and the organic chloride content was 0.32%.

Then, an autoclave having a capacity of 1 liter was charged with 280 g of NMP, 25.9 g of 60% sodium sulfide and 7.8 g of sodium p-toluene-sulfonate, and the mixture was heated at 204°C to effect dehydration. The mixture was cooled to 150°C, and 28.6 g of m-dichlorobenzene and 56.7 g of the above-mentioned polymer were added. Reaction was carried out at 230°C for 2 hours and at 260°C for 3 hours in the same manner as described above to obtain 72.6 g of a white granular block copolymer (hereinafter referred to as "B-PPS-1").

Synthesis Example 5

(synthesis of a block PPS copolymer containing 15% by mole of m-phenylene sulfide units

The synthesis of the block PPS copolymer was carried out under the same conditions as described in Synthesis Example 4 except that 15.8 g of 60% sodium sulfide, 4.1 g of sodium p-toluene-sulfonate, 17.2 g of m-dichlorobenzene, and 64.3 g of the above-mentioned polymer were used at the second stage of the reaction, to obtain 72.8 g of a white granular polymer (hereinafter referred to as "B-PPS-2").

Synthesis Example 6

(synthesis of a block PPS copolymer containing 8% by mole of m-phenylene sulfide units)

The synthesis of the block PPS copolymer was carried out under the same conditions as described in Synthesis Example 4 except that 8.9 g of 60% of sodium sulfide, 4.1 g of sodium p-toluene-sulfonate, 9.15 g of m-dichlorobenzene, and 69.5 g of the above-mentioned polymer were used at the second stage of the reaction, to obtain 71.9 g of a white granular polymer (herein-after referred to as "B-PPS-3").

Synthesis Example 7

(synthesis of p-PPS homopolymer)

The synthesis of the p-PPS was carried out under the same conditions as described in Synthesis Example 1 except that 102.9 g of p-dichlorobenzene and 0.25 g of 1,2,4-trichlorobenzene were used instead of 25.73 g of m-dichlorobenzene and 77.18 g of p-dichlorobenzene, to obtain 71.6 g of a white granular polymer (hereinafter referred to as "p-PPS-1").

Synthesis Example 8

(synthesis of p-PPS)

The synthesis of a p-PPS homopolymer was carried out under the same conditons as described in Synthesis Example 4 except that sodium p-toluene-sulfonate was not used, and 70.3 g of a white powdery polymer was obtained. Then, the polymer was heated and partially crosslinked in an oven at 250°C for 16 hours to obtain a brown powdery polymer (hereinafter referred to as "p-PPS-2").

Synthesis Example 9

(synthesis of m-PPS)

A stainless steel autoclave having a capacity of 1 liter was charged with 91.0 g of 60% sodium sulfide, 280 g of N-methyl-2-pyrrolidone (NMP), 2.03 g of 48% aqueous sodium hydroxide, and 80.5 g of sodium p-toluene-sulfonate dehydrate, and the mixture was stirred under nitrogen purging and heated at 204°C to effect dehydration and distill 73.7 g of NMP containing 35.3 g of water. The mixture was cooled to 150°C and a solution of 102.9 g of m-dichlorobenzene in 100g of NMP was added, the reaction system was closed, and the pressure was elevated to about 3.0 bar by nitrogen. The temperature was elevated with stirring and reaction was carried out at 230°C for 2 hours and at 260°C for 3 hours. The reaction mixture was cooled to room temperature and filtered by a Nutsche filter. Then, the sodium chloride-containing polymer was washed five times with 300 g of warm water at 50°C and two times with 300 g of methanol, and was then dried to obtain 68.8 g of a white granular polymer (hereinafter referred to as "m-PPS-1").

Synthesis Example 10

(synthesis of branched m-PPS)

The synthesis of m-PPS was carried out under the same conditions as described in Synthesis Example 1 except that 102.39 g of m-dichlorobenzene and 0.64 g of 1,2,4-trichlorobenzene were used isntead of 102.9 g of m-dichlorobenzene, and 68 g of a white granular polymer (branched m-PPS homopolymer) (hereinafter referred to as "m-PPS-2") was obtained.

The physical properties of the polymers obtained in the synthesis examples are shown in Table 1.

Table 1

| Characteristics / Polymers | m-ps Content *1 (mole%) | I.V. *2 | Melt Viscosity *3 (Pa.s) | *4 $Tc_1$ (°C) | *4 $Tc_2$ (°C) | Tm (°C) |
|---|---|---|---|---|---|---|
| R-PPS-1 | 25 | 0.30 | 150 | 52 | 155 | 196 |
| R-PPS-2 | 12 | 0.31 | 180 | 91 | 192 | 239 |
| R-PPS-3 | 5 | 0.33 | 210 | 113 | 211 | 263 |
| B-PPS-1 | 25 | 0.24 | 170 | 139 | 179 | 269 |
| B-PPS-2 | 15 | 0.23 | 160 | 135 | 196 | 276 |
| B-PPS-3 | 8 | 0.29 | 220 | 132 | 203 | 277 |
| p-PPS-1 | 0 | 0.32 | 300 | 127 | 227 | 285 |
| p-PPS-2 | 0 | 0.25 | 250 | 127 | 240 | 281 |
| m-PPS-1 | 100 | 0.15 | 110 | Not detected | Not detected | Not detected |
| m-PPS-2 | 100 | 0.17 | 190 | Not detected | Not detected | Not detected |

Note

*1: m-phenylene sulfide units

*2: inherent viscosity measured at 206°C with respect to an α-chloronaphthalene solution having a polymer concentration of 0.4 g/100 ml

*3: melt viscosity measured by using a Koka type flow tester at 300°C and 200 $sec^{-1}$ by using an orifice having a diameter of 0.5 mm and a length of 1.0 mm

*4: $Tc_1$ , $Tc_2$ and Tm represent the crystallization temperature at the time of elevation of the temperature, the crystallization temperature at the time of dropping of the temperature, and the peak temperature of the melting

point, respectively, determined by a differential scanning calorimeter at a temperature elevating or dropping rate of 10°C/min (Note, each sample was once melted, quenched by methanol/dry ice, and then measured)

Examples 1 through 13 and Comparative Examples 1 through 7

Polymers obtained in Synthesis Examples 1 through 10 were preliminarily mixed at ratios shown in Table 2 in the powdery state, and the mixtures were compressed and molded into tablets having a diameter of 10 mm and a height of 15 mm. By using a flow tester to which an orifice having a diameter of 0.5 mm and a length of 1.0 mm was attached, each sample was melt-blended at 320°C for a preheating time of 6 minutes and was extruded. The extrudate was quenched by putting it into methanol/dry ice. The results of the thermal analysis are shown in Table 3. For comparison, the results obtained when the respective polymers were used alone are similarly shown.

Table 2

| | Example No. | | | | | | | | | | | | | Comparative Example No. | | | | | | |
|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 1 | 2 | 3 | 4 | 5 | 6 | 7 |
| R-PPS-1 | 48 | | | 80 | 44 | | | | | | | | | 100 | | | | | | |
| R-PPS-2 | | 67 | | | | | | | | | | | | | 100 | | | | | |
| R-PPS-3 | | | 60 | | | | | | | | | | | | | 100 | | | | |
| B-PPS-1 | | | | | | 48 | | | 80 | 44 | | | | | | | 100 | | | |
| B-PPS-2 | | | | | | | 40 | | | | | | | | | | | 100 | | |
| B-PPS-3 | | | | | | | | 50 | | | | | | | | | | | 100 | |
| p-PPS-1 | 52 | 33 | | 20 | 56 | 52 | | 50 | | 56 | 97 | 94 | 91 | | | | | | | 100 |
| p-PPS-2 | | | 40 | | | | 60 | | 20 | | | | | | | | | | | |
| m-PPS-1 | | | | | | | | | | | 3 | 6 | | | | | | | | |
| m-PPS-2 | | | | | | | | | | | | | 9 | | | | | | | |
| Content of 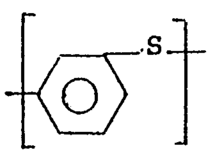 | 12 | 8 | 3 | 20 | 11 | 12 | 6 | 4 | 20 | 11 | 3 | 6 | 9 | 25 | 12 | 5 | 25 | 15 | 8 | 0 |

Note
Each numerical value indicates parts by weight, but the unit of the content is % by mole.

With respect to each of the PPS resin composition samples, the crystallization temperature $Tc_1$ at the time of elevation of the temperature, the crystallization temperature $Tc_2$ at the time of dropping of the temperature, and the peak temperature Tm of the melting point were determined according to the abovementioned method. The results are shown in Table 3.

Table 3

| | $Tc_1$ (°C) | $Tc_2$ (°C) | Tm (°C) |
|---|---|---|---|
| Example 1 | 93 | 192 | 275 |
| Example 2 | 104 | 203 | 277 |
| Example 3 | 118 | 218 | 284 |
| Example 4 | 71 | 168 | 262 |
| Example 5 | 96 | 195 | 273 |
| Example 6 | 108 | 189 | 281 |
| Example 7 | 98 | 203 | 283 |
| Example 8 | 96 | 206 | 283 |
| Example 9 | 111 | 176 | 275 |
| Example 10 | 101 | 192 | 278 |
| Example 11 | 119 | 240 | 284 |
| Example 12 | 114 | 227 | 283 |
| Example 13 | 110 | 217 | 283 |
| Comparative Example 1 | 52 | 155 | 196 |
| Comparative Example 2 | 91 | 192 | 239 |
| Comparative Example 3 | 113 | 211 | 263 |
| Comparative Example 4 | 139 | 179 | 269 |
| Comparative Example 5 | 135 | 196 | 276 |
| Comparative Example 6 | 132 | 203 | 277 |
| Comparative Example 7 | 127 | 227 | 285 |

Example 14

(preparation of films and physical property tests)

By using samples of Examples 1 through 3, 6 through 8, 11 and 12, and Comparative Examples 1, 2 and 7, pressed sheets and biaxially drawn films were prepared according to the following methods and the strength characteristics were determined. The results are shown in Table 4.

(a) The sample was heated at 310°C and pressed into the form of a sheet, and the sheet was put into cold water to form a press sheet having a thickness of 0.1 to 0.2 mm.

(b) By using a small-size biaxial drawing apparatus, the pressed sheet obtained in (a) above was simultaneously biaxially drawn at a draw ratio of 3.0 x 3.0 to obtain a drawn film. The drawing temperature was 95°C. The drawn film was heat-treated at 250°C for 10 seconds.

Table 4

| | Appearance | | Thickness | Tensile strength | Elongation |
|---|---|---|---|---|---|
| | Uniformity | Transparency | (μm) | ($kg/mm^2$) | (%) |
| Example 1 | G | G | 30 | 500 | 6 |
| Example 2 | G | G | 33 | 460 | 6 |
| Example 3 | G | G | 34 | 790 | 6 |
| Example 6 | G | G | 30 | 510 | 7 |
| Example 7 | G | G | 33 | 480 | 6 |
| Example 8 | G | G | 34 | 483 | 6 |
| Example 11 | G | G | 29 | 500 | 6 |
| Example 12 | G | G | 30 | 490 | 7 |
| Comparative Example 1 | R.P. | G | 34 | 460 | 4 |
| Comparative Example 2 | R.P. | G | 31 | 370 | 5 |
| Comparative Example 7 | R.P. | G | 29 | 380 | 5 |

Note

G: good

R.P.: relatively poor

## Claims

1. A polyphenylene sulfide composition comprising a poly-p-phenylene sulfide homopolymer and a poly-p-phenylene sulfide/m-phenylene sulfide random copolymer, a poly-p-phenylene sulfide/m-phenylene sulfide block copolymer and/or a poly-m-phenylene sulfide homopolymer, wherein the amount of m-phenylene sulfide units is 3 to 30% by mole based on the sum of p-phenylene sulfide units and m-phenylene sulfide units in the composition.

2. A compositon as set forth in claim 1, wherein the random copolymer and the block copolymer comprise 2 to 98% by mole of p-phenylene sulfide units and 98 to 2% by mole of m-phenylene sulfide units.

3. A composition as set forth in claim 1, which comprises 5 to 95% by mole of a poly-p-phenylene sulfide homopolymer and 95 to 5% by mole of a poly-p-phenylene sulfide/m-phenylene random or block copolymer.

4. A composition as set forth in claim 1, which comprises 70 to 97% by mole of a poly-p-phenylene sulfide homopolymer and 30 to 3% by mole of a poly-m-phenylene sulfide homopolymer.

5. A composition as set forth in claim 1, wherein the poly-p-phenylene sulfide homopolymer, poly-p-phenylene sulfide/m-phenylene sulfide random copolymer, poly-p-phenylene sulfide/m-phenylene sulfide block copolymer and poly-m-phenylene sulfide homopolymer are linear polymers, branched polymers or partially crosslinked polymers.

European Patent Office

# EUROPEAN SEARCH REPORT

Application Number

EP 87 10 8916

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | EP-A-0 166 451 (KUREHA KAGAKU)<br>* Claims; page 34, lines 19-21 *<br>--- | 1-5 | C 08 L 81/02<br>C 08 G 75/02 |
| X | FR-A-2 282 453 (PHILLIPS PETROLEUM)<br>* Claims *<br>--- | 1-5 | |
| Y | PATENT ABSTRACTS OF JAPAN, vol. 8, no. 93 (C-220)[1530], 27th April 1984; & JP-A-59 11 357 (ASAHI GLASS K.K.) 20-01-1984<br>* Whole abstract *<br>--- | 1-5 | |
| A | CHEMICAL ABSTRACTS, vol. 99, no. 4, 25th July 1983, page 26, abstract no. 23291d, Columbus, Ohio, US; V.A. SERGEEV et al.: "Effect of isomerism on the structure and properties of copolyphenylene sulfides", & VYSOKOMOL. SOEDIN., SER. B 1983, 25(5), 368-71<br>* Whole abstract *<br>--- | 1 | |
| P,X | EP-A-0 189 895 (KUREHA KAGAKU)<br>* Claims *<br>----- | 1-5 | **TECHNICAL FIELDS SEARCHED (Int. Cl.4)**<br>C 08 L<br>C 08 G |

The present search report has been drawn up for all claims

| Place of search | Date of completion of the search | Examiner |
|---|---|---|
| THE HAGUE | 07-12-1987 | DERAEDT G. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)